(19) Europäisches Patentamt
European Patent Office
Office européen des brevets

(11) Numéro de publication: **0 133 607**
**B1**

(12) # FASCICULE DE BREVET EUROPÉEN

(45) Date de publication du fascicule du brevet: **23.11.88**

(51) Int. Cl.⁴: **G 01 N 21/41**

(21) Numéro de dépôt: **84810376.8**

(22) Date de dépôt: **31.07.84**

(54) **Réfractomètre pour mesurer l'indice de réfraction d'un liquide.**

(30) Priorité: **03.08.83 CH 4215/83**

(43) Date de publication de la demande: **27.02.85 Bulletin 85/9**

(45) Mention de la délivrance du brevet: **23.11.88 Bulletin 88/47**

(84) Etats contractants désignés: **AT BE CH DE FR GB IT LI LU NL SE**

(56) Documents cité:
**FR-A-2 159 771**
**GB-A-2 008 793**
**US-A-3 267 795**
**US-A-3 625 620**

**OPTICA ACTA, vol. 17, no. 5, 1970, pages 363-380, Londres, GB; J.E. GEAKE: "Optical properties of the linear critical-angle refractometer"**

(73) Titulaire: **Stanley Electric Co., Ltd., 2-9- 13, Nakameguro, Meguro- ku Tokyo 153 (JP)**

(72) Inventeur: **Harmer, Alan Lewis, 74, chemin de la Mère- Voie, F-1228 Plan Les Ouates (CH)**

(74) Mandataire: **Dousse, Blasco, 7, route de Drize, CH-1227 Carouge/Genève (CH)**

**EP 0 133 607 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

Le présente invention a pour objet un rérfractomètre pour mesurer l'indice de réfraction d'un liquide comprenant un prisme dont une des faces au moins est en contact avec le liquide à mesurer, une scurce de lumière pour diriger un faisceau de lumière à travers ce prisme et passant à travers ladite face en contact avec le liquide et à travers une face en contact avec un autre milieu.

De tels réfractomètres sont bien connus. Ils présentent généralement la particularité de mesurer l'indice de réfraction pour une température déterminée. Si cette particularité est acceptable lorsque la température du liquide peut être contrôlée, elle ne l'est pas dans d'autres cas comme les réfractomètres, utilisés pour indiquer l'état de charge d'une batterie en fonction de l'indice de réfraction de l'électrolyte de la batterie.

On a déjà décrit dans le brevet GB-2 008 793 un tel réfractomètre présentant une face formée d'une portion cylindrique réceptrice d'un faisceau de lumière incidente en contact avec ledit liquide et une face d'emergence des rayons lumineux réfractés par la face réceptrice et transmis à travers le prisme en formant le long de la face d'émergence de part et d'autre d'une ligne de transition, une zone éclairée et non eclairée, la position de cette ligne de transition étant fonction de l'indice de réfraction du liquide.

Comme expliqué dans Optica acta 1970, vol. 17, No 5, pp. 363 - 380, il est possible, grâce à un prisme dont une surface réceptrice d'un faisceau lumineux est constituée par une portion de cylindre immergée dans le liquide dont on veut connaître l'indice de réfraction, d'obtenir sur une face d'où émergent les rayons lumineux, une ligne de transition nette entre une zone éclairée, formée par la partie réfractée du faisceau traversant les deux milieux d'indice de réfraction différents et une zone non éclairée. Cette face où convergent les rayons lumineux se situe sur un plan parallèle à un diamètre du cylindre perpendiculaire à la direction générale des rayons réfractés et la position de la ligne de transition entre ces zones éclairées et non éclairées est une fonction pratiquement linéaire de l'indice de infraction du liquide. Ce réfractomètre est base sur le fait que l'angle d'incidence des rayons du faisceau lumineaux augmente progressivement, en raison de la courbure de la surface réceptrice, de sorte qu'au delà d'un angle critique, les rayons du faisceau lumineux ne sont plus réfractés à travers le prisme, cet angle critique d'incidence étant fonction du rapport entre l'indice de réfraction du liquide et celui du prisme.

Tous les rayons réfractés arrivent sur le plan de convergence à la droite d'un certain point qui forme la frontière entre les zones éclairées et non éclairées et la position de la ligne de contraste entre ces zones est fonction du rapport entre les indices de réfaction du liquide et celui de la sonde.

Ces considérations sont vraies pour autant que la température du liquide et du prisme soit connue, ou demeure constante. Or, lorsque l'on utilise un tel réfractomètre pour déterminer l'indice de réfraction de l'électrolyte d'une batterie électro-chimique et par là le degré de charge de cette batterie, on ne connaît pas la température de l'électrolyte qui peut varier de plusieurs dizaines de degrés lorsqu'il s'agit d'une batterie de voiture automobile. Par conséquent, il n'est pas possible d'établir une corrélation directe entre l'indice de réfraction mesuré et l'état de charge de la batterie.

On connaît déjà des réfractomètres avec des moyens prévus en vue de compenser les variations de température, de manière à mesurer l'indice d'un liquide en fonction d'une tempéraure de référence.

Un tel dispositif est notamment décrit dans le US-A-3 267 795, dans lequel un prisme comporte une face d'entrée de lumière en contact avec un liquide dont on désire mesurer l'indice de réfraction. Les angles de réfraction de la lumière traversant ce prisme varient en fonction de l'indice de réfraction, de sorte que les faisceaux lumineux réfractés puis concentrés par un objectif pour former une image optique située dans le plan image de cet objectif, forment sur ce plan image une zone lumineuse et une zone sombre proportionnelles à l'indice de réfraction. Pour rendre cette mesure indépendante de la température, un organe optique de compensation est disposé entre le prisme et l'objectif pour recevoir les faisceaux réfractés par le prisme et leur communiquer une seconde réfraction en fonction des angles d'incidence et variant avec la température, cet organe optique de compensation étant orienté sur la trajectoire des faisceaux lumineux de telle sorte que les angles de déviation varient par degré de température de la même valeur mais en sens inverse aux angles de déviation du prisme de manière à rendre la mesure effectuée par le dispositif, indépendante de la température.

Cette solution nécessite, outre la présence d'un prisme, celle d'une optique de focalisation et celle d'un organe optique de compensation. Ces éléments doivent être positionnés de façon précise les uns par rapport aux autres, ce qui nécessite un carter avec des organes de positionnement et un certain travail de montage des différents organes optiques dans le carter.

Le but de la présente invention est d'apporter une simplification aux réfractomètres à compensation thermique.

A cet effet, la présente invention a pour objet un réfractomètre tel que défini par la revendication 1.

L'avantage d'un tel réfractomètre est de fournir non seulement une indication linéaire en fonction de l'indice de réfraction, mais en plus une indication de cet indice ramené à une température de référence. Par conséquent, dans le cas où le liquide est constitué par l'électrolyte d'une batterie électro-chimique, cet indice de réfraction est une corrélation directe de l'état de charge de la batterie, dans la mesure où le paramètre température est pratiquement neutralisé ou tout au moins fortement atténué. La solution proposée est simple, entièrement optique et insensible aux vibrations, ce qui est particulièrement important dans le cas de son utilisation dans le domaine de l'autmobile.

Le dessin annexé illustre schématiquement et à titre d'exemple deux formes d'exécution du réfractomètre objet de la présente invention.

La figure 1 est une vue schématique de la première forme d'execution.

La figure 2 est une vue schématique de la seconde forme d'execution.

La figure 3 est une vue partielle agrandie de cette forme d'exécution.

La forme d'exécution illustrée par la figure 1 est plus particulièrement destinée à expliquer le principe de la présente invention. Ce réfractomètre comporte un prisme P placé sur la trajectoire d'un faisceau lumineux issu d'une source lumineuse S et passant à travers une lentille LE. Ce prisme P est partiellement plongé dans un liquide L dont on désire mesurer l'indice de réfraction.

Comme on le constate, les faces d'incidence et d'émergence du prisme P forment des angles non droits avec l'axe du faisceau lumineux F, de sorte que ce faisceau subit une première réfraction en pénétrant dans le prisme P et une deuxième en en ressortant. Dans le cas présent où le milieu incident est de l'air, la variation d'indice de réfraction en fonction de la température est très sensiblement plus faible que celle du liquide à mesurer. Si la température augmente par exemple, l'angle de réfraction du faisceau incident augmente moins que l'angle de réfraction du faisceau émergent du prisme, comme illustrée en traits interrompus à la figure 1. Il s'ensuit qu'en choisissant correctement les dimensions, les faisceaux réfractés à des températures différentes se rejoignent à peu près en un point donné. Ces conditions seront examinées plus en détail dans le cas de la seconde forme d'exécution.

Le réfractomètre illustré par la figure 2 comporte un prisme P dont une face semi-cylindrique 1, reçoit des rayons incidents ri d'un faisceau lumineux issu d'un diode électroluminescente DEL. Cette diode et la face semi-cylindrique 1 du prisme P sont plongées dans le liquide L dont on désire mesurer l'indice de réfraction. Ce prisme comporte une face d'émergence 2 des rayons du faisceau incident réfractés qui forme un angle θ avec un plan de convergence 3 des rayons réfractés, parallèle à un plan diamètral de la face semi-cylindrique 1, réceptrice des rayons incidents, perpendiculaire à la direction générale des rayons réfractés rr à travers le prisme P. Une partie des rayons incidents ri sont réfractés à travers le prisme P en fonction du rapport entre l'indice de réfraction du liquide ni et celui du prisme $n_p$ en formant sur le plan de convergence 3 une zone non éclairée u et une zone éclairée s.

Nous allons examiner maintenant comment la longueur de la zone non éclairée u varie en fonction de la température, r étant le rayon de la face semi-cylindrique I,

$$s = r\,(n_i/n_p)$$

$$u = r - s = r\,[I - (n_i/n_p)]$$

$$\tfrac{du}{dt} = \dot{u} = \dot{r}\,[\,I - n_i/n_p] - r\,\tfrac{\dot{n}_i}{n_p} + \tfrac{n_i}{n_p} 2\,\dot{n}_p$$

$$\dot{u} = \tfrac{\dot{r}}{r} \cdot r\,(I - \tfrac{n_i}{n_p}) - r\,\tfrac{n_i}{n_p}\,(\tfrac{\dot{n}_i}{n_i}) + r\,(\tfrac{n_i}{n_p})\,\tfrac{\dot{n}_p}{n_p}$$

FIG00/15

Examinons maintenant l'influence de la variation d'indice de réfraction du prisme en fonction de la température pour un prisme dont la face d'émergence 2 forme un angle nul avec le plan 3, pour un prisme en plexiglas (PMMA), ainsi que pour un prisme en polyméthyl pentane (TPX), tous deux avec la face réceptrice 1 plongée dans une solution de $H_2SO_4$ à 28 %.

**Pour le PMMA**

$n_p = 1{,}49$, $n_i = 1{,}365$, $\dot{n}_p = -1{,}3 \cdot 10^{-4}/°C$, $\dot{n}_i = -2{,}5 \cdot 10^{-4}/°C$

$\dot{r}/r = \alpha =$ coeff. de dilatation $= 7 \cdot 10^{-5}/°C$ $r = 24{,}8$ mm

Le terme 1 de l'équation de $\dot{u} = +\,0{,}163\ \mu m/°C$
Le terme 2 de l'équation de $u = 4{,}16\ \mu m/°C$
Le terme 3 de l'équation de $u = 1{,}98\ \mu m/°C$

$\dot{u} = 2{,}34\ \mu/°C$ ($\tfrac{dn}{dt} \sim -\,1{,}40 \cdot 10^{-4}/°C$)

**Pour le TPX**

$n_p = 1{,}465$, $n_i = 1{,}365$, $\dot{n}_o = -1{,}67 \cdot 10^{-4}/°C$, $\dot{n}_i = -2{,}5 \cdot 10^{-4}/°C$

$\dot{r}/r = 11{,}7 \cdot 10^{-5}/°C$, $r = 24{,}8$ mm

Le terme (1) de l'équation de $\dot{u} = +\,0{,}198\ \mu m/°C$
Le terme (2) de l'équation de $\dot{u} = +\,4{,}23\ \mu m/°C$
Le terme (3) de l'équation de $\dot{u} = -\,2{,}63\ \mu m/°C$
$\dot{u} = 1{,}80\ \mu m/°C$ ($\frac{dn}{dt} \sim -\,1{,}08 \cdot 10^{4}/°C$)

On constate que u varie d'autant moins que la variation d'indice de réfraction du prisme en fonction de la température est de valeur plus grande.

Il y a lieu de remarquer que le terme 1 de l'équation est dû à la dilatation thermique du prisme et les valeurs indiquées sont relatives au centre du rayon pour une photodiode indépendante du prisme. Si la photodiode est fixée à une distance u directement sur le prisme P, elle se déplace avec le prisme et il ne subsiste qu'une erreur secondaire inférieure à l'erreur indiquée, qui peut de ce fait être négligée.

Le tableau I qui va suivre compare la sensibilité en température de différentes matières plastiques.

**TABLEAU I**

| | Matière (1)* | | Prisme seul (2)* | | Prisme + capteur (3)* | n | Données publiées (4)* | | |
|---|---|---|---|---|---|---|---|---|---|
| | Indice de réfraction | $\frac{dn}{dT} \cdot 10^{-4}/°C$ | déplacement de la zone noire/claire (µm/°C) | équivalent $\frac{dn}{dT} \cdot 10^{-4}/°C$ | $\frac{dn}{dT} \cdot 10^{-4}/°C$ | | $\frac{dn}{dT} \cdot 10^{-4}/°C$ | $\alpha \cdot 10^{-5}/°C$ | Tg (°C) |
| PMMA feuilles | 1,4813 à 26 °C | -1,35 | | | | 1,492 | -0,85 | 7 | 110° |
| PMMA tige | 1,4912 à 26°C | -1,26 | 2,2±0.5 | -1,32±0,3 | -1,11 | | | (5-9) | |
| TPX (ICI) | 1,4612 à 26°C | -1,67 | 1,1±0.3 | -0,66±0,2 | Probe CP4 -0,52 | 1,465 | | 11,7 | |
| EPOTEK No 307.2 | 1,5617 à 25°C | -1,00 | | | | | | | |
| Poly Carbonate PC (Markolan) | 1,5857 à 23°C | -0,92 | | | | 1,586 | -1,45 | 6,6 | |
| PVC | 1,5382 à 26°C | -1,18 | 1,4±0.5 | -0,84±0.3 | | | | 6,6-7,3 | 70-100° |
| SUBSTRAT DE BPX48 PHOTODIODE | 1,5707 à 24°C | -0,80 | | | | | | | |

* Voir remarques à la suite du tableau

1. Mesuré sur réfractomètre Abbé n et dn/dT
2. Mesuré dans un milieu d'indice de réfraction de 1,38 en utilisant un microscope avec une graduation pour observer le déplacement de la ligne de transition noir/clair
3. Avec double PD BPx48 collée sur le prisme
4. De Polymer Handbook, et "Plastics Optics" Optical Spectra, Juillet 1974, p. 27.

Si le TPX avec son dn/dt le plus élevé est le matériau qui produit la variation la plus faible en fonction de la température, il ne permet pas d'éliminer cette variation.

C'est la raison pour laquelle l'objet de l'invention réside principalement dans une modification de structure du prisme qui consiste à former l'angle θ entre la face d'émergence 2 du prisme P et le plan de convergence 3 sur lequel est portée la graduation qui, dans cet exemple, est relative à l'état de charge de la batterie.

Si l'on se reporte au schéma explicatif de la figure 2, on a représenté un rayon incident ri réfracté à travers le prisme et, après réfraction, ce rayon est désigné par rr. Ceci correspond à la réfraction à une première température $T_0$. Si la température s'élève de $T_0$ à $T_1$ ce même rayon incident prend la trajectoire dessinée en traits mixtes $rr_1$ du fait de la diminution de l'indice de réfraction du liquide. Etant donné qu'il y a également diminution de l'indice de réfraction du matériau formant le prisme P, le sinus de l'angle β que forme le rayon émergent avec la normale à la face 2 au point d'incidence du rayon sur cette face, est fonction de cet indice multiplié par le sinus de l'angle d'incidence, de sorte que l'angle de réfraction β diminue avec l'augmentation de la température, du fait que la valeur de l'indice de réfraction diminue lorsque la température augmente.

Cette compensation n'est pas totale. Toutefois, on constate que le prisme en TPX, dont la valeur dn/dT mesurée (voir tableau I) est de - 0,66 · $10^{-4}$/°C, passe avec le prisme dont la face 2 fait un angle θ de 35° avec le plan 3, à - 1,3 · $10^{-5}$/°C.

Cette valeur est obtenue en plaçant une double photodiode sur le plan focal 3 des rayons réfractés et en mesurant le rapport R entre les courants de photodiodes PDa/PDb en fonciton de la température d'une solution $H_2SO_4$ d'indice de réfraction 1,3680. La moyenne des rapports mesurés donne

$$\frac{dR}{dT} = 1,2 \cdot 10^{-4}$$

qui est équivalent à une variation apparente d'indice de réfraction en fonction de la température de - 1,3 · $10^{-5}$/°C. Si l'on considère que la valeur dn/dT dans un liquide d'indice de réfraction $n_i$ = 1.37 ($H_2SO_4$ à 28 %) est de - 2,5 · $10^{-4}$/°C, on constate qu'avec une sonde TPX dont la face 2 d'émergence des rayons réfractés forme un angle de l'ordre de 35° avec le plan 3, la variation d'indice de réfraction en fonction de la température est 20 fois plus faible.

Le tableau II donne la sensibilité de ce prisme en TPX mesurée à différents indices de réfraction du liquide à l'aide d'une double photodiode $PD_a$, $PD_b$ dont le courant est mesuré en nA, le courant de la diode électroluminescente DEL étant de 50 mA.

**TABLEAU II**

| Indice de réfraction | 1,3528 | 1,3597 | 1,3680 | 1,3772 | 1,3828 |
|---|---|---|---|---|---|
| $PD_a$ | 196 | 220 | 248 | 276 | 267 |
| $PD_b$ | 440 | 430 | 430 | 415 | 395 |
| Rapport | 0,445 | 0,511 | 0,576 | 0,665 | 0,676 |

La sensibilité $\frac{dR}{dn}$ mesurée ici de 9.1/indice de réfraction, est relativement réduit du fait que la double photodiode ne se trouvait pas exactement sur le plan focal des rayons réfractés par la face 2.

L'angle θ de cette face 2 avec le plan parallèle au plan diamétral du prisme perpendiculaire à la direction générale des rayons réfractés à travers le prisme étant choisi à 35°, nous allons calculer la position de la photodiode ou de l'échelle graduée par rapport au point d'émergence sur la face coupée 2 du rayon réfracté caractéristique de l'indice de réfraction du liquide et formant la ligne de transition entre les zones éclairées et non éclairées.

Si l'on se reporte à la figure 3, on a représenté partiellement le prisme de la figure 2 à échelle agrandie. Son plan de focalisation 3 est partiellement coupé pour former la face 2 inclinée de l'angle θ par rapport au plan de focalisation 3. On a représenté deux rayons réfractés $rr_1$ et $rr_2$ qui sont caractéristiques de l'indice de réfraction du liquide à respectivement 20°C et 30°C. La distance d entre ces deux rayons réfractés est très fortement exagérée pour faciliter l'explication. La variation d'indice de réfraction du prisme P en TPX en fonction de la température est, selon le tableu 1 de 0,52 · $10^{-4}$/°C ce qui donne pour un prisme, dont le rayon r est de 24,8 mm, un déplacement d de 0,87 µm/°C ou 8,7 µm pour 10°C.

Le rayon r étant choisi de même que l'angle θ, d pour une variation de 10°C étant déterminé, il y a lieu de

calculer les paramètres a, b et c pour déterminer la position de la double photodiode $PD_a$, $PD_b$ destinée à mesurer la position de la ligne de transition entre les zones éclairées et non éclairées caractéristique de l'indice de réfraction du liquide dans lequel le réfractomètre est plongé. Cette position se situe dans une zone de convergence des rayons émergents de la face 2 du prisme pour un liquide de concentration donnée, mais dont l'indice est mesuré à différentes températures.

$$\frac{a + d/\cos\theta}{\tan\beta} = \frac{a}{\tan\beta'}$$

$$\text{donc } a = \frac{d \tan\beta'}{\cos\theta\,(\tan\beta - \tan\beta')}$$

$$b = \frac{a}{\sin\beta} = \frac{a}{n_p \sin\theta}$$

$$c = n_p\, b = \frac{a}{\sin\theta}$$

Le tableau III donne les valeurs de ces paramètres, ainsi que des angles de réfraction β, β' respectivement des rayons réfractés à travers le prisme $rr_1$ et $rr_2$, ceci pour différents angels θ de la face 2.

**TABLEAU III**

| θ | β | β' | a (mm) | b (mm) | c (mm) |
|---|---|---|---|---|---|
| 30° | 47,167° | 47,069° | 4,08 | 5,57 | 8,16 |
| 35° | 47,272° | 57,171 | 2,69 | 3,20 | 4,69 |
| 40° | 70,520° | 70,336° | 1,12 | 1,19 | 1,74 |

**Revendications**

1. Réfractomètre pour mesurer l'indice de réfraction d'un liquide, comprenant un prisme (P) dont une des faces (1) au moins est en contact avec le liquide (L) à mesurer, une source de limière (DEL) pour diriger un faisceau de rayons lumineux parallèles à travers ce prisme et passant à travers ladite face en contact avec le liquide en formant avec cette face (1) un angle non droit, cette face (1) étant formée par une portion cylindrique apte à faire converger les rayons réfractés ($rr_1$, $rr_2$) sur un plan de convergence (3) en formant le long de ce plan, de part et d'autre d'une ligen de transition, une zone éclairée et une zone non éclairée, caractérisé par le fait que l'on forme une face d'émergence (2) de ces rayons réfracés ($rr_1$, $rr_2$) en contact avec un autre milieu dont la variation d'indice de réfraction est sensiblement inférieure à celle du liquide à mesurer et formant un angel aigu (θ) avec ledit plan convergence (3) des rayons réfractés, une échelle de mesure ($PD_a$, $PD_b$) étant disposée en un lieu dans lequel les faisceaux réfractés par la face d'émergence (2) sont sensiblement convergent indépendamment d'une certaine plage de température pour un liquide de nature donnée dont l'indice de réfraction varie en fonction de la plage de température affectant simultanément ledit liquide et le prisme dont une face est en contact avec lui.

2. Réfractomètre selon la revendication 1, caractérisé par le fait que le prisme (P) est constitué par un matériau dont la variation d'indice de réfraction en fonction de la variation de température est supérieure à $-1{,}1 \cdot 10^{-4}/°C$.

**Patentansprüche**

1. Refraktometer zum Messen des Brechungsindex einer Flüssigkeit, mit einem Prisma (P), von dem wenigstens eine Fläche (1) mit der zu messenden Flüssigkeit (L) in Kontakt ist und mit einer Lichtquelle (DEL), um ein Bündel paralleler Lichtstrahlen durch das Prisma zu richten und durch die mit der Flüssigkeit in Kontakt stehende Fläche durchtreten zu lassen, wobei mit dieser Fläche (1) ein nicht rechter Winkel gebildet wird und wobei diese Fläche (1) durch einen zylindrischen Teil gebildet ist, der die gebrochenen Strahlen ($rr_1$, $rr_2$) auf eine Konvergenzebene (3) konvergieren lassen kann und entlang dieser Ebene zu beiden Seiten einer Übergangslinie eine beleuchtete und eine unbeleuchtete Zone bildet, dadurch gekennzeichnet, daß man eine Austrittsfläche (2) dieser gebrochenen Strahlen ($rr_1$, $rr_2$) in Kontakt mit einem anderen Medium bildet, dessen Änderung des Brechungsindex wesentlich geringer als jener der zu messenden Flüssigkeit ist, und mit der Konvergenzebene (3) der gebrochenen Strahlen einen spitzen Winkel (θ) bildet, wobei eine Meßskala ($PD_a$,

$PD_b$) an einem Ort vorgesehen ist, an dem die von der Austrittsfläche (2) gebrochenen Bündel im wesentlichen konvergent sind, und zwar unabhängig von einem gewissen Temperaturbereich, für eine Flüssigkeit gegebener Art, deren Brechungsindex sich in Abhängigkeit des Temperaturbereiches ändert, der gleichzeitig die Flüssigkeit und das Prisma beeinflußt, von dem eine Fläche damit in Kontakt ist.

2. Refraktometer nach Anspruch 1, dadurch gekennzeichnet, daß das Prisma (P) aus einem Material besteht, bei dem die Änderung des Brechungsindex als Funktion der Änderung der Temperatur größer als $-1{,}1 \cdot 10^{-4}/°C$ ist.

**Claims**

1. Refractometer for measuring the refractive index of a liquid, comprising a prism (P) of which at least one of the faces (1) is in contact with the liquid (L) to be measured, a light source (DEL) for directing a parallel beam of light through the prism and passing through the said face in contact with the liquid by forming with this face (1) a non-orthogonal angle, this face (1) being formed of a cylindrical portion capable of focussing the refracted beam ($rr_1$, $rr_2$) on a convergence plane (3) by forming along this plane, on both sides of a transition line, a lighted zone and an obscure zone, characterized in forming a face (2) of emergence of this refracted beam ($rr_1$, $rr_2$) in contact with another medium whose refractive index vaiation is substantially below that of the liquid to be measured, forming a sharp angle ($\theta$) with said convergence plane (3) of the refracted beam, a measuring scale ($PD_a$, $PD_b$) being disposed in a place in which the beams refracted by the face of emergence (2) are substantially convergent independently of a given temperature range for a liquid of a given composition the refractive index of which varies as a function of a temperature range affecting simultaneously the said liquid and the prism of which one face is in contact therewith.

2. Refractometer according to claim 1, characterised in that the prism (P) is constituted of a material whose refractive index variation as a fonction of the temperature variation is greater than $-1{,}1 \cdot 10^{-4}/°C$.

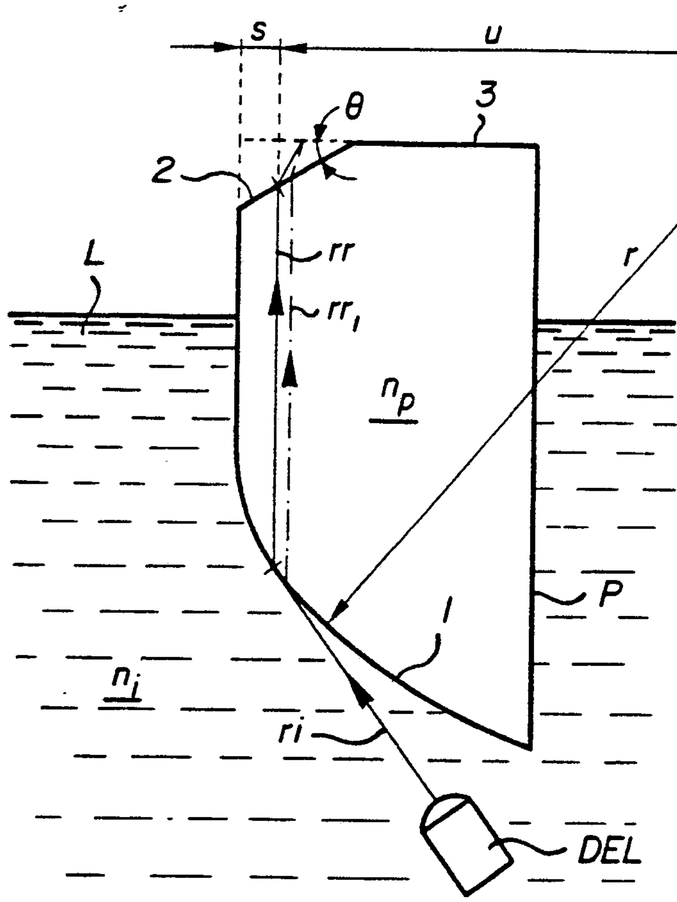


FIG. 2

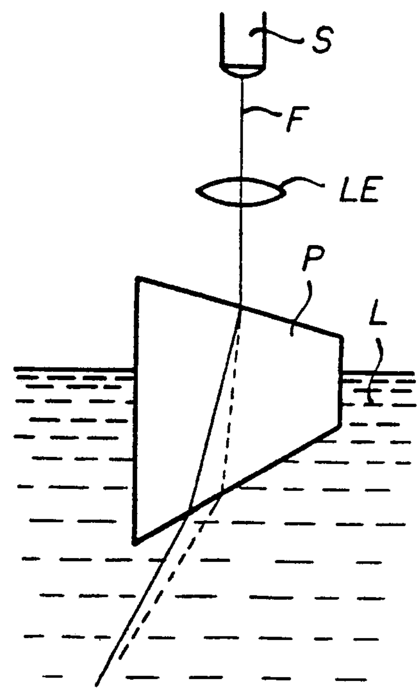


FIG. 1

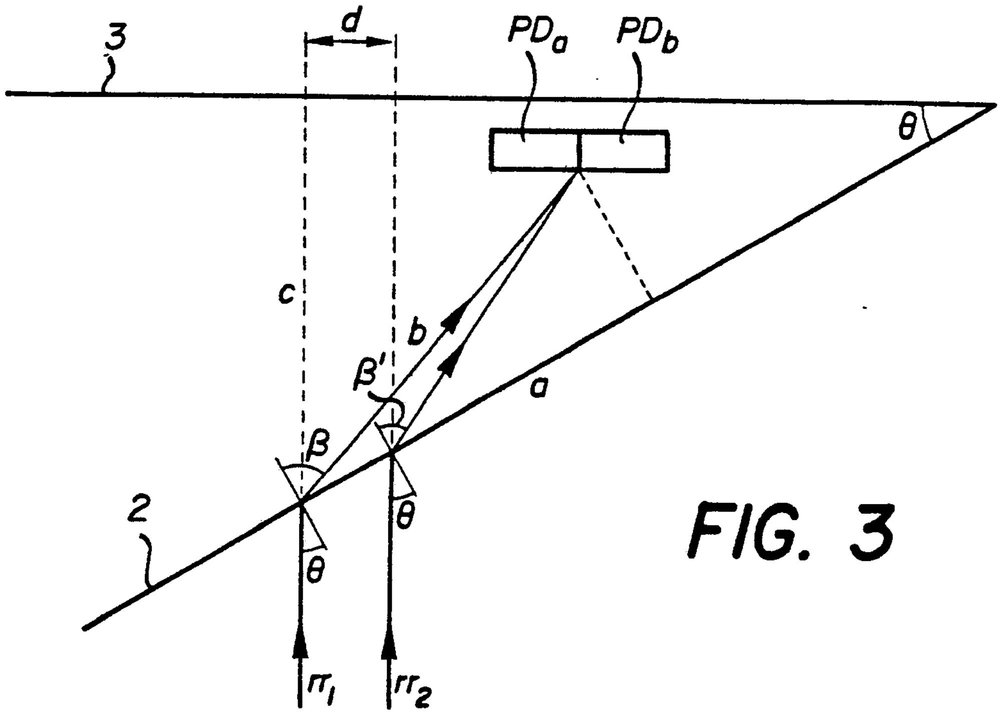


FIG. 3